# EUROPÄISCHE PATENTSCHRIFT

(11) **EP 4 500 688 B1**
(45) Veröffentlichungstag und Bekanntmachung des Hinweises auf die Patenterteilung: **25.06.2025**
(21) Anmeldenummer: 24725468.3
(22) Anmeldetag: 08.05.2024
(51) Int. Cl.: H02S 40/10, F24S 40/20

(54) **FÜHRUNGSSYSTEM ZUR INSTALLATION AN EINER PV-ANLAGE UND ZUR FÜHRUNG WENIGSTENS EINER MOBILEN FAHREINHEIT FÜR AUSFÜHRUNG VON WARTUNGSARBEITEN**
GUIDE SYSTEM FOR INSTALLING ON A PV INSTALLATION AND FOR GUIDING AT LEAST ONE MOBILE TRAVELLING UNIT FOR CARRYING OUT MAINTENANCE WORK
SYSTÈME DE GUIDAGE DESTINÉ À ÊTRE INSTALLÉ SUR UNE INSTALLATION PHOTOVOLTAÏQUE ET À GUIDER AU MOINS UNE UNITÉ DE DÉPLACEMENT MOBILE POUR EFFECTUER UN TRAVAIL DE MAINTENANCE

(30) Priorität: 11.05.2023 DE 102023112502
(43) Veröffentlichungstag der Anmeldung: 05.02.2025
(73) Patentinhaber: sun-X GmbH, 85447 Fraunberg (DE)
(72) Erfinder: LIEBOLD, Pascal, 85447 Fraunberg (DE)
(74) Vertreter: von Tietzen und Hennig, Nikolaus
(86) Internationale Anmeldenummer: PCT/EP2024/062772
(87) Internationale Veröffentlichungsnummer: WO 2024/231469

(56) Entgegenhaltungen:
- DE-A1- 10 317 479
- DE-A1- 102014 014 696
- DE-A9- 102010 014 789

## Beschreibung

Die Erfindung betrifft ein Führungssystem zur Installation an einer Photovoltaik-Anlage und zur Führung wenigstens einer Fahreinheit für die Ausführung von Wartungsarbeiten an der PV-Anlage.

Durch den fortschreitenden Ausbau erneuerbarer Energien nimmt auch der Aufbau von großen Photovoltaik-Anlagen stetig zu. Solche Anlagen werden im Privatbereich auf Hausdächern sowie industriell auf großen Hallendächern oder auch in großen Solarparks installiert. Zur Wahrung einer hohen Anlageneffizienz ist deren ständige Überwachung notwendig. So ist bspw. bei Verunreinigungen der Solarpaneele eine Reinigung der Oberfläche dringend geboten. Dies stellt jedoch gerade Betreiber großer bzw. schlecht zugänglicher Anlage vor große Herausforderungen. Die damit einhergehende Problematik wurde bereits erkannt und erste Automatisierungslösungen entwickelt.

So existieren Lösungen mit autonom fahrenden Reinigungsrobotern, die sich selbständig auf den Paneelen bewegen und mittels rotierenden Reinigungsbürsten Verschmutzungen auf den Paneelen lösen. Ein Nachteil solcher Lösungen besteht darin, dass die Roboter zunächst händisch auf die Paneele aufgesetzt werden müssen, was eine Vollautomatisieren nicht zulässt. Auch sind die maximale Betriebsdauer und der Arbeitsbereich bei einer solchen, rein mobilen Anwendung stark begrenzt, was deren Einsatzmöglichkeiten gerade in großen Solarparks beeinträchtigt.

Eine solche Lösung wird in dem Dokument DE 10 2014 014696 A1 aufgezeigt.

Neben der Anlagenreinigung ist auch eine regelmäßige, bevorzugt sensorische Überwachung der Anlage wünschenswert, um im ersten Schritt Verschmutzungen oder gar Schäden an der Anlage zu erkennen.

Es besteht daher der Wunsch nach einem möglichst autonomen System für die Durchführung von etwaigen Wartungsarbeiten an einer beliebigen PV-Anlage. Ein solches System soll möglichst kostengünstig und flexibel sein, um eine Installation für unterschiedliche Anlagentypen gewährleisten zu können.

Gelöst wird diese Aufgabe durch ein System zur Durchführung von Wartungsarbeiten an einer Photovoltaikanlage, das als wesentlichen Bestandteil eine an der Anlage montierbare Führungsschiene aufweist, die zur Führung einer entlang der Führungsschiene verfahrbaren mobilen Fahreinheit geeignet ist. Ein solches Führungssystem zeichnet sich durch die Merkmale des Anspruchs 1 aus, vorteilhafte Ausführungen sind Gegenstand der abhängigen Ansprüche.

Die erfindungsgemäße Führungsschiene umfasst wenigstens zwei Laufflächen für Führungsmittel einer geführten Fahreinheit. Die Laufflächen dienen als Führungsfläche für zwei getrennte Führungsmittel, bspw. zwei separate Führungsrollen der Fahreinheit. Idealerweise weist die Führungsschiene mindestens drei Laufflächen für drei separate Laufrollen der Fahreinheit auf. Entlang wenigstens einer der Laufflächen verläuft wenigstens eine Stromschiene zur Energieversorgung der mobilen Fahreinheit. Die Stromschiene dient zur Bereitstellung eines Schleifkontaktes, um die Fahreinheit mit der notwendigen Betriebsenergie, bspw. einer Gleichspannung, versorgen zu können. Ein geeigneter Stromabnehmer, insbesondere Schleifkontakt der Fahreinheit kann entlang der Führungsrichtung auf der Stromschiene entlanggleiten und so für eine durchgängige Energieversorgung der Fahreinheit sorgen. Vorzugsweise dient eine Stromschiene zur Bereitstellung des elektrischen Gleichspannungspotentials, während eine zweite elektrische Stromschiene als Neutralleiter dient.

Die Fahreinheit weist eine Funktionseinheit zur Ausführung der gewünschten Wartungsarbeit auf, bspw. wenigstens eine angetriebene Bürstenrolle zur Oberflächenreinigung der Solarpaneele oder eine Blaseinheit, um Schmutzpartikel per Drucklauf zu entfernen. Alternativ kann die Funktionseinheit eine Elektronik zur sensorischen und/oder kamerabasierten Überwachung der Paneele aufweisen. Denkbar ist auch die Verwendung einer Funktionseinheit zur Ausführung von Thermografie-Messungen im Bereich der Paneele. Bevorzugt kann auch ein Einsatz einer Funktionseinheit sein, die zur Auftragung einer Versiegelung auf die Paneele geeignet ist. Die erfindungsgemäße Lösung ist nicht auf eine spezifische Funktionseinheit beschränkt.

Die Ausführung mit wenigstens zwei, idealerweise drei Laufflächen für separate Führungsmittel der Fahreinheit ermöglicht eine bessere Antriebstraktion der Fahreinheit, sodass auch größere Steigungen bewältigt werden können. Zudem wird die Absturzsicherheit der Fahreinheit verbessert, was gerade bei Arbeiten in großer Höhe wichtig ist.

Die wenigstens eine Stromschiene kann als separates Bauteil gefertigt sein, das an einem die Führungsschiene bildenden Bauteil angeordnet ist. Die wenigstens eine Stromschiene kann jedoch auch durch einen Flächenbereich des der Führungsschiene entsprechenden Bauteils gebildet sein.

Die Stromschiene ist vorzugsweise zumindest teilweise in das Profil der Führungsschiene integriert, wodurch ein gewisser Schutz der Schiene vor äußeren Einflüssen gewährleistet ist. Durch die integrierte Stromschiene ist eine aufwändige Verlegung etwaiger separater Versorgungskabel überflüssig. Dies erhöht nicht nur die Sicherheit der Anlage, sondern vereinfacht zudem deren Aufbau und ist darüber hinaus wartungsfreundlicher und kostengünstiger.

Besonders bevorzugt ist es, wenn die Führungsschiene modular aufgebaut ist bzw. aufgebaut werden kann. Insbesondere kann die Führungsschiene aus einer Vielzahl modularer Profilelemente bestehen, die zum Aufbau des Systems zusammenfügbar sind, insbesondere lösbar miteinander verbindbar sind. Durch das Modulkonzept lässt sich das Führungssystem flexibel an unterschiedliche PV-Anlagen anpassen, d.h. das System ist sowohl für die Montage an kleinen Anlagen auf Dächern als auch zur Anwendung innerhalb großer PV-Parks geeignet. Auch ist eine Montage an sogenannten Tracking-Systemen denkbar.

Jedes einzelne modulartige Profilelement umfasst wenigstens zwei, idealerweise wenigstens drei Laufflächen und wenigstens eine integrierte Stromschiene, sodass beim Zusammenfügen durchgehende Laufflächen und wenigstens eine kontinuierliche Stromschiene gewährleistet ist. Der modulartige Aufbau der Führungsschiene kann aus identischen als auch unterschiedlichen Profilelementen bestehen, wobei sich letztere zwar hinsichtlich ihres Querschnittprofils gleichen können, jedoch Abweichungen in ihrer Länge und/oder Formgebung in Längsrichtung unterscheiden können.

Bspw. kann die Führungsschien bzw. können einzelne Profilelemente Abschnitte mit rein linearem Verlauf der Laufflächen und/oder Stromschiene sowie Abschnitte mit gekrümmtem Verlauf der Laufflächen und/oder Stromschiene aufweisen. Dadurch lässt sich nicht nur ein linearer Führungsverlauf realisieren, sondern es können Kurvenabschnitte ermöglicht werden, was insbesondere für die Zuführung einer Fahreinheit an die PV-Anlage oder bei einem Übergang zwischen geteilten Paneelen hilfreich sein kann. Idealerweise lässt sich mittels des modularen Führungssystems auch eine Führung in Vertikalrichtung zu einem Installationsort in größerer Höhe (bspw. auf ein Dach) bewerkstelligen.

Die einzelnen Profilelemente können unmittelbar miteinander verbindbar sein. Bevorzugt ist es jedoch, wenn eine Verbindung zwischen zwei Profilelementen zumindest an bestimmten Übergängen durch ein dazwischenliegendes Verbindungselement herstellbar ist. Ein solches Verbindungselement umfasst ebenfalls korrespondierende Laufflächen und/oder wenigstens eine entsprechende Stromschiene. Gemäß bevorzugter Ausgestaltung umfasst ein solches Verbindungselement an wenigstens einer, bevorzugt an beiden Verbindungsseiten ein oder mehrere gesonderte Kopplungsmittel, die sich von der Verbindungsseite in Längsrichtung erstrecken und bevorzugt in geeignete Hohlräume des Verbindungspartner eingreifen, so dass zwischen den Verbindungspartnern eine ausreichende Kraftübertragung garantiert ist. Die Kopplungsmittel können in Form von an den Verbindungsseiten auskragenden Zapfen ausgeführt sein, die bei der Verbindung mit einem Profilelement in einen zugeordneten Hohlraum des Verbindungspartners eintreten. Die Kopplungsmittel können an den Verbindungsseiten des Profilelementes und/oder des Verbindungselements ausgestaltet sein.

Gemäß bevorzugter Ausführungsform wird vorgeschlagen, dass ein solches Verbindungselement ein Montageelement zur Befestigung und insbesondere Lagerung der Führungsschiene an einer PV-Anlage aufweist. Ein solches Montageelement kann beispielsweise in Form einer auskragenden Montagekonsole vorgesehen sein, die entweder eine lineare, abgewinkelte oder sonstige Strukturform aufweist. Mittels dem Montagelement kann die Aufhängung der Führungsschiene an einer Rahmenstruktur der PV-Anlage vorgesehen sein. Insbesondere umfasst die Montagekonsole ein oder mehrere Bohrlöcher zur Verschraubung der Führungsschiene mit der PV-Anlage. Klarerweise können Montagelemente auch an Profilelementen ausgeführt sein. Die Montagelemente können zudem unterschiedlich ausgestaltet sein, insbesondere auf die jeweilige Montagestelle angepasst sein.

Ein weiterer, besonders vorteilhafter Aspekt der Erfindung besteht darin, dass die Führungsschiene neben der wenigstens einen Stromschiene wenigstens einen, vorzugsweise wenigstens zwei parallel zu den Laufflächen verlaufende Versorgungskanäle für die Bereithaltung etwaiger Media für die Ausführung von Wartungsarbeiten aufweist. Die ein oder mehreren Versorgungskanäle erstrecken sich innerhalb der Profilform der Führungsschiene und sind gegenüber der Umgebung abgedichtet, was den Transport unterschiedlicher Flüssigkeiten oder Gase gestattet. Zweckmäßig ist beispielsweise die Verwendung der Versorgungskanäle zur Bereitstellung von Wasser, Reinigungsmittel oder Gasen, insbesondere entlang der gesamten Führungsstrecke. Bei geeigneter Abdichtung der Versorgungskanäle können diese auch zum Transport von unter Druck stehenden Fluiden eingesetzt werden.

Die Integration der Versorgungskanäle in die Struktur der Führungsschiene macht separate Versorgungsleitungen überflüssig. Die innerhalb der Struktur geschützte Unterbringung erhöht die Anlagensicherheit und Zuverlässigkeit. Insgesamt vereinfacht sich der Aufbau, was die Montage- und Herstellungskosten reduziert.

Für die Versorgung der Fahreinheit aus dem oder den Kanälen können ein oder mehrere Entnahmestellen an der Führungsschiene vorgesehen sein. Die ein oder mehreren Entnahmestellen sind von außen für die Fahreinheit zugänglich, insbesondere kann eine Versorgungsverbindung herstellbar sein, wenn sich die Fahreinheit unmittelbar im Bereich der Entnahmestelle befindet bzw. diese überfährt. Die Entnahmestelle kann direkt im Bereich der Lauffläche oder unmittelbar neben einer Lauffläche an der Außenwand der Führungsschiene eingebracht sein.

Besonders sinnvoll ist die Ausgestaltung der Entnahmestelle als selbst schließendes Ventil, das bei Kontaktierung eines Gegenstücks der Fahreinheit, bspw. einem Stutzen, einen Mediumaustausch zulässt. Wird das Gegenstück entfernt, weil sich die Fahreinheit wegbewegt, schließt das Ventil selbständig. Denkbar ist die Ausführung als Kugelventil.

Vorzugsweise ist eine solche Entnahmestelle im Bereich der Verbindungselemente auf oder neben den Laufflächen installiert, insbesondere in einem Bereich, der direkt von der Fahreinheit überfahren wird.

Zur Abdichtung der Versorgungskanäle, insbesondere im Bereich der Schnittstellen zwischen benachbarten Verbindungs- oder Profilelementen, können im Bereich der Verbindungsseiten in die Kanäle ein oder mehrere Dichtungselemente eingesetzt sein. Die Dichtungselemente können Ringdichtung oder ringähnliche Dichtungen sein, die entlang der Innenwand des Kanals verlaufen bzw. auf der Aussenfläche der Kopplungsmittel bzw. Zapfen sitzen.

Die Herstellung der einzelnen Profilelemente und/oder der Verbindungselemente kann beispielsweise per Guss, insbesondere Stranggussverfahren erfolgen. Als geeignetes Material erweist sich Aluminium.

Ferner ist es vorstellbar, dass ein oder mehrere Profilelemente und/oder ein oder mehrere Verbindungselemente jeweils mehrteilig, insbesondere zwei- oder dreiteilig, ausgestaltet sind. Die Einzelbestandteile lassen sich per Form-, Kraft- oder Stoffschluss zu einem Profilelement bzw. Verbindungselement zusammenfügen.

Gemäß einer bevorzugten Ausgestaltung kann sowohl die das Spannungspotential führende Stromschiene als auch die den Neutralleiter bildende Stromschiene durch das Profilelement selbst gebildet sein. Idealerweise wird bei einem zwei- bzw. mehrteilig gefertigtem Profil- und/oder Verbindungselement jeweils eine Stromschiene durch ein Einzelbestandteil gebildet. Denkbar ist es bspw., das die das Spannungspotential führende Stromschiene durch einen sich entlang der Laufflächen erstreckenden Flächenbereich eines ersten Einzelbestandteils des Profil- und/oder Verbindungselementes gebildet ist, während der Neutralleiter durch einen entsprechenden Flächenbereich des zweiten Einzelbestandteils des Profil- oder Verbindungselementes gebildet ist. Beim Zusammenfügen der beiden Einzelbestandteile muss auf eine ausreichende elektrische Isolation zwischen beiden Einzelbestandteilen geachtet werden.

Besonders bevorzugt sind beide Einzelbestandteile aus einem elektrisch leitfähigem Material gefertigt. Die elektrische Isolation zwischen den Einzelbestandteilen kann durch eine isolierende Beschichtung der Oberflächenbereiche der Einzelbestandteile, zumindest im Kontraktbereich beider Einzelbestandteile, erreicht werden. Aus Sicherheitsgründen ist jedoch eine großflächige isolierende Beschichtung sinnvoll. Durch eine Aussparung der Isolationsschicht kann durch die unbeschichteten Oberflächenbereiche der Einzelbestandteile eine entsprechende Stromschiene realisiert werden. Idealerweise sind die unbeschichteten Oberflächenbereiche durch Vorsprünge, Wandungen oder sonstigen Auskragungen der Einzelbestandteile teilweise verdeckt, um einen gewissen Schutz der Stromschiene vor Verschmutzung zu gewährleisten. Auch wird dadurch teilweise ein Berührschutz realisiert.

Das Zusammenfügen der Einzelbestandteile kann auch mittels eines gesonderten Trägerelementes erfolgen, das gleichzeitig auch die Isolierung zwischen den die Stromschienen ausbildenden Einzelbestandteilen bewirkt. Denkbar ist die Ausführung des Trägerelementes aus Kunststoff oder einem anderen, nicht leitenden Material.

Alternativ kann wenigstens eine Stromschiene als separates Bauteil zumindest teilintegriert im Profil der Führungsschiene angeordnet sein, insbesondere in das Profil der Profilelemente bzw. Verbindungselemente. Gemäß einer Ausführungsvariante kann die Stromschiene, insbesondere die das Gleichspannungspotential führende Stromschiene, innerhalb der Führungsschiene in einem gesonderten Kanal verlaufen, der von unten über eine Längsöffnung durch einen Stromabnehmer der Fahreinheit zugänglich ist. Der Neutralleiter kann durch das Profilelement bzw. Verbindungselement selbst gebildet sein. Die Stromschiene kann aus einem flächigen, elektrisch leitenden Material bestehen, das über ein oder mehrere Befestigungsmittel am Profilelement bzw. dem Verbindungselement gelagert ist. Die Befestigungsmittel dienen idealerweise gleichzeitig zur elektrischen Isolierung der Stromschiene gegenüber dem als Neutralleiter dienendem Profilelement/Verbindungselement. Die Unterseite der Profilform entspricht demjenigen Teil der Profilform, der nach Montage an einer PV-Anlage in Richtung des Montagebodens bzw. Dachs der Anlage weist und gegenüberliegend zur auf der Führungsschiene aufgesetzten Fahreinheit liegt.

Die Längsöffnung bzw. die dahinterliegende Stromschiene kann jedoch teilweise durch wenigstens einen, sich von der Unterseite der Profilform erstreckende Wandungsabschnitte der Führungsschiene teilüberdeckt sein. Beispielsweise ist die Stromschiene durch zwei, sich von der Kante der Längsöffnung schräg nach unten, die Längsöffnung reduzierend erstreckende Teilwandungen überdeckt. Die Teilwandungen dienen als zusätzlicher Schmutzfänger zum Schutz der Stromschiene vor Tropfwasser oder sonstigen Einflüssen. Durch die schräge, nach unten gerichtete Orientierung läuft Wasser ab, ohne in Kontakt mit der Stromschiene zu kommen.

Um der auf der Führungsschiene verfahrbaren Funktionseinheit eine Positionserkennung zu ermöglichen, kann die Führungsschiene mit ein oder mehreren geeigneten Markierungen versehen sein, bspw. in Form von elektronischen, visuellen oder strukturellen Markierungen. Mittels der Markierungen kann die Position eines Zugangs zu den Versorgungskanälen der Führungsschiene, eines Hindernisses oder eine sonst relevanten Position erfolgen. Denkbar ist es, dass die Profilform eine Vertiefung der Außenkontur vorsieht, in die eine geeignete Markierung einsetzbar ist.

Die Profilform der Führungsschiene ist insbesondere so gewählt, dass sich insgesamt drei separate Laufflächen ergeben, auf denen drei Laufrollen, insbesondere Kegelrollen der Fahreinheit abrollen. Die Orientierung der einzelnen Laufflächen ist dabei so gewählt, dass die Fahreinheit klemmend auf der Führungsschiene arretiert werden kann, wodurch die Traktion erhöht wird und eine Selbstarretierung auf der Führungsschiene gewährleistet ist. Die Laufflächen sind idealerweise so ausgerichtet, dass Laufrollen der Fahreinheit um einen Winkel von 90° bzw. 135° um die Längsachse der Führungsschiene versetzt zueinander angeordnet sind.

Neben der erfindungsgemäßen Führungsschiene betrifft die vorliegende Erfindung auch ein System zur Durchführung von Wartungsarbeiten an einer Photovoltaikanlage mit einer an der Anlage befestigten Führungsschiene gemäß der Erfindung sowie einer entlang der Führungsschiene fahrbaren Fahreinheit. Bevorzugt umfasst die Fahreinheit eine beliebige Funktionseinheit zur Durchführung etwaiger Wartungsarbeiten an der Photovoltaikanlage. Besonders bevorzugt ist es, wenn die Fahreinheit universell mit unterschiedlichen Funktionseinheiten bestückbar ist, sodass über das System unterschiedliche Wartungsarbeiten ausführbar sind.

Idealerweise wird die Führungsschiene an einer Rahmenstruktur der PV-Anlage montiert.

Weitere Vorteile und Eigenschaften der Erfindung sollen nachfolgend anhand eines in den Darstellungen gezeigten Ausführungsbeispielen näher erläutert werden. Es zeigen:
- Figuren 1a, 1b, 1c:: unterschiedliche Installationsvarianten des erfindungsgemäßen Führungssystems,
- Figur 2:: eine Seitenansicht des erfindungsgemäßen Systems mit Führungsschiene und aufgesetzter Fahreinheit sowie Funktionseinheit,
- Figur 3:: ein Profilschnitt durch ein Profilelement für die erfindungsgemäße Führungsschiene gemäß einer ersten Ausführungsform,
- Figur 4:: eine Draufsicht auf ein passendes Verbindungselement der erfindungsgemäßen Führungsschiene gemäß der ersten Ausführungsform,
- Figur 5:: ein Profilschnitt durch das Verbindungselement gemäß Figur 4,
- Figur 6:: ein Profilschnitt durch ein Profilelement für die erfindungsgemäße Führungsschiene gemäß einer zweiten Ausführungsform,
- Figur 7:: eine Seitenansicht auf ein korrespondierendes Verbindungselement der erfindungsgemäßen Führungsschiene gemäß der zweiten Ausführungsform,
- Figur 8:: eine Ansicht auf die Oberseite des Verbindungselementes der Figur 7,
- Figuren 9a, 9b:: Schnittdarstellungen des Verbindungselementes der Figuren 7, 8 bei geschlossener und geöffneter Entnahmestelle,
- Figur 10:: ein Profilschnitt durch ein Profilelement für die erfindungsgemäße Führungsschiene gemäß einer dritten Ausführungsform,
- Figur 11:: ein Profilschnitt durch ein Profilelement für die erfindungsgemäße Führungsschiene gemäß einer vierten Ausführungsform,
- Figur 12:: eine perspektivische Seitenansicht eines Profilelementes gemäß einer fünften Ausführungsform, und
- Figur 13:: das korrespondierende Verbindungselement für Profilelemente gemäß Figur 12.

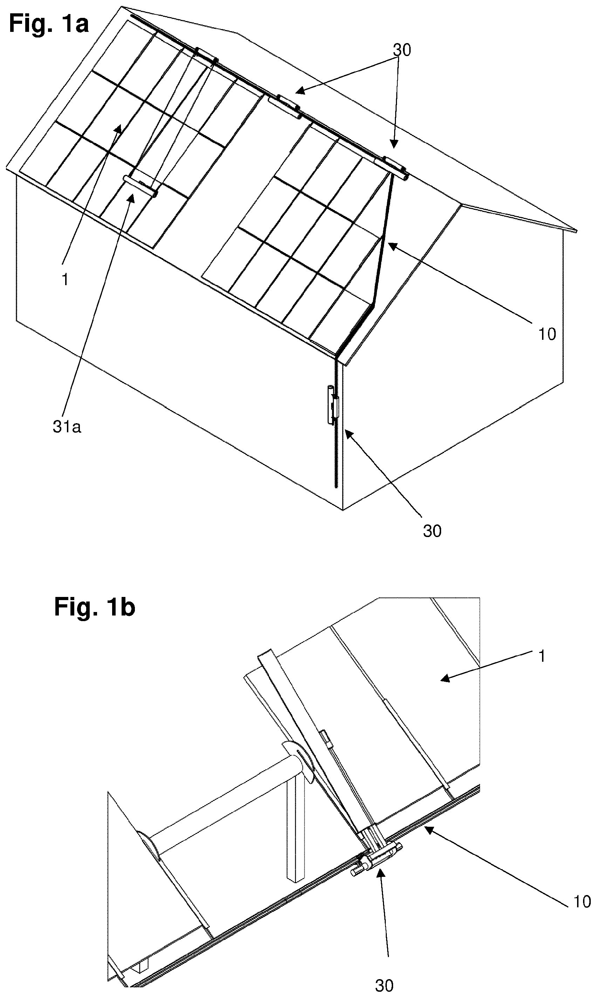

Die Figuren 1a - 1c zeigen unterschiedliche Installationsmöglichkeiten für die erfindungsgemäße Führungsschiene bzw. das erfindungsgemäße System zur Durchführung von Wartungsarbeiten. Figur 1a zeigt exemplarisch ein Ein- bzw. Mehrfamilienhaus mit einer auf der Dachfläche installierten Photovoltaik-Anlage. Zur Durchführung von Wartungsarbeiten, bspw. zur Reinigung der Paneele 1, kommt hier das erfindungsgemäße System zum Einsatz. Die Führungsschiene 10 des Führungssystems ist vom Grundstückboden zunächst in Vertikalrichtung an der Hauswand bis zur Dachfläche verlegt. Von dort verläuft die Führungsschiene 10 bis zu Oberkante der Solarpaneele 1 nahe des Dachfirsts, wo die Schiene 10 weiter parallel zum Dachfirst an der Oberkante der Paneele 1 montiert ist.

Auf der Führungsschiene 10 sind, wie hier in der Abbildung dargestellt, insgesamt vier mobile Fahreinheiten 30 geführt, die unterschiedliche Wartungsarbeiten an der Photovoltaikanlage vornehmen können. In der gezeigten Darstellung sind die Fahreinheiten 30 mit Funktionseinheiten 31 zur Reinigung der Solarpaneele 1 bestückt. Eine solche Reinigungseinheit 31 kann eine Bürsteneinheit 31a aufweisen, die von der Funktionseinheit 31 über ein Seilsystem steuerbar und von der Fahreinheit 30 nach unten über die Fläche der Paneele abgelassen werden kann.

Die Energieversorgung der Fahreinheiten 30 und der darauf installierten Funktionseinheiten 31 erfolgt über die Führungsschiene 10, die dazu mit einer integrierten Stromschiene versehen ist. Über einen Schleifkontakt der Fahreinheit 30 mit der Stromschiene werden etwaige elektrischen Bauteile der Fahr- und Funktionseinheit 30, 31 versorgt, und zwar über die gesamte Wegstrecke des Schienenwegs. Ergänzend dazu sind in der Führungsschiene 10 ein oder mehrere Versorgungskanäle integriert, über die der Funktionseinheit 31 Reinigungsmittel, Wasser, Druckluft oder sonstige Medien zur Verfügung gestellt werden können.

Figur 1b zeigt eine alternative Anwendung des erfindungsgemäßen Systems. Die erfindungsgemäße Führungsschiene 10 wird an einem sogenannten Solar-Tracksystem installiert. Die Ausrichtung der Paneele 1 wird hier über eine Stellmechanik automatisch an den aktuellen Sonnenstand angepasst. Wie dargestellt, ist die Führungsschiene 10 an der Unterkante eines die Paneele 1 umgebenden Rahmens installiert. Durch den flexiblen Aufbau der Führungsschiene 10 kann diese mit den Paneelen 1 gemeinsam verschwenkt werden.

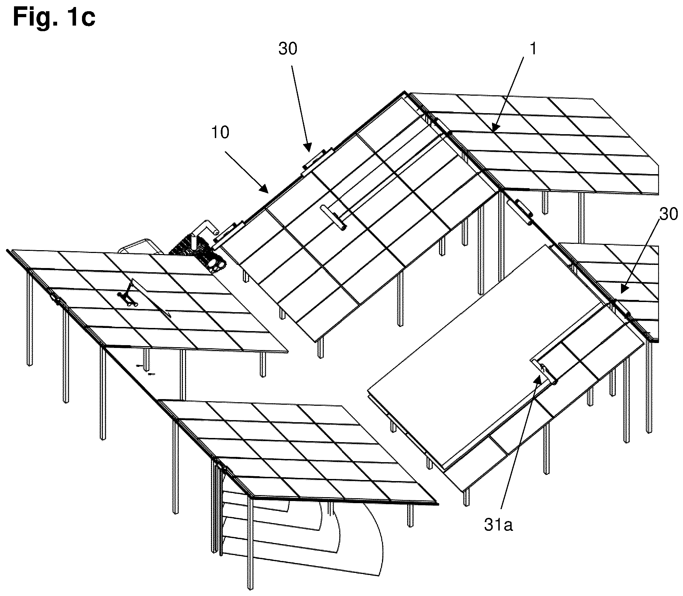

Figur 1c zeigt das erfindungsgemäße System für die Ausführung von Wartungsarbeiten in einem Solarpark. Die Führungsschiene ist hier entlang der Rahmenstruktur der PV-Anlage montiert, und zwar sowohl in Horizontalrichtung an der Oberkante des Paneele-Feldes als auch seitlich parallel zur Längsachse der Paneele 1.

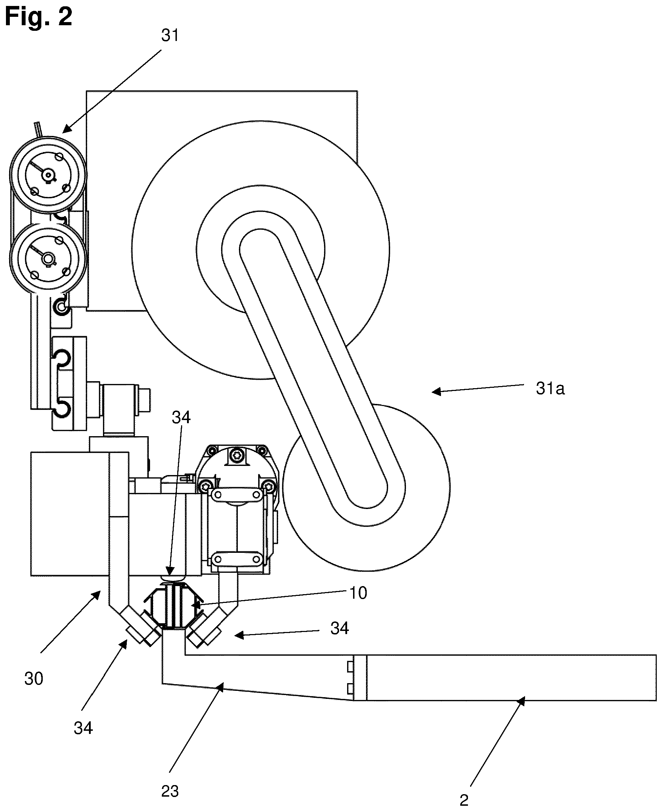

Figur 2 zeigt einen schematischen Aufbau des erfindungsgemäßen Systems in einer Seitenansicht der Fahr- und Funktionseinheit 30, 31. Die erfindungsgemäße Führungsschiene 10 ist hier an einer Rahmenstruktur 2 der PV-Anlage montiert. Die Fahreinheit 30 kann zwei, in Fahrtrichtung versetzte Führungsschlitten umfassen, um eine gleichmäßige Gewichtsaufnahme der auf der Fahreinheit 30 installierten Funktionseinheit 31 zu gewährleisten. Jeder Führungsschlitten 30 ist mit insgesamt drei Laufrollen 34 ausgestattet, die auf zugeordneten Laufflächen der erfindungsgemäßen Führungsschiene 10 abrollen. Durch die um 90° bzw. 135° um die Längsachse der Führungsschiene versetzte Anordnung der Laufrollen 34 kann die Fahreinheit auf die Führungsschiene 10 geklemmt werden, wodurch die Traktion der Fahreinheit 30 insbesondere für Vertikalfahrten optimiert ist und auch eine Absturzsicherung insbesondere im Defektfall garantiert ist. Die einzelnen Laufrollen könnten alternativ auch als Kegelrollen ausgestaltet sein.

Auf der Fahreinheit 30 ist die Funktionseinheit 31 wechselbar aufgenommen. In der Darstellung der Figur 2 ist die Funktionseinheit eine Reinigungseinheit mit integraler Reinigungsbürste 31a. Die Bürste 31a lässt sich über ein Seilzugsystem von der Fahreinheit 30 ablassen. Die Energieversorgung sowie die Versorgung mit Wasser oder sonstigen Medien erfolgt über die Führungsschiene 10.

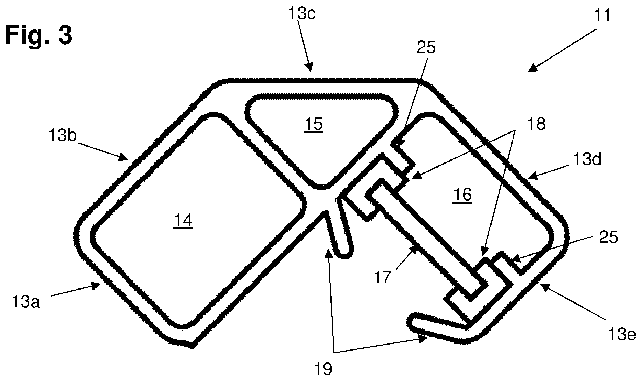

Der Aufbau der Führungsschiene 10 soll nachfolgend anhand der Figuren 3 bis 5 beschrieben werden. Die Führungsschiene 10 wird modular aus einzelnen Profilelementen 11 zusammengesetzt, wobei zwei Profilelemente 11 entweder unmittelbar miteinander verbunden oder über ein dazwischen eingebrachtes Verbindungselement 12 mittelbar miteinander verbunden werden können. Sowohl die Profilelemente 11 als auch die Verbindungselemente 12 werden per Stranggussverfahren aus Aluminium gegossen.

Figur 3 ist eine Schnittdarstellung des Querschnittprofils des Profilelementes gemäß einer ersten möglichen Ausgestaltung. Das Profil zeigt eine gekantete Aussenkontur mit den zueinander gewinkelten Teilflächen 13a, 13b, 13c, 13d, 13e, wobei bspw. die Teilflächen 13a, 13c und 13e mögliche Laufflächen für eine Fahreinheit bilden können. Bei Verwendung von Kegelrollen an der Fahreinheit könnten auch alle Teilflächen als Laufflächen genutzt werden. Die Profilform ist auf ihrer Unterseite in Längsrichtung geöffnet, sodass von außen Zugang zu einer innerhalb eines Hohlraums 16 installierten und in Längsrichtung verlaufenden Stromschiene 17 besteht. Die Stromschiene 17 ist dabei über zwei Befestigungsmittel 18, die gleichzeitig isolierende Wirkung haben, innerhalb des Hohlraums 16 an der Raumwandung gelagert. Die Befestigungsmittel 18 umfassen eine Längsnut, die in Längsrichtung auf die Seitenkanten der Stromschiene 17 geklemmt wird. Im Hohlraum 16 erstreckt sich in Längsrichtung auf gegenüberliegenden Hohlraumwandungen eine Anschlagsfläche 25, an dieser die Befestigungsmittel 18 anliegen.

Die installierte Stromschiene wird zudem durch zwei, auf gegenüberliegenden Öffnungskanten liegende Teilwandungen 19 verdeckt, die sich nach schräg unten und zueinander gerichtet erstrecken. Durch die Teilwandungen 19 wird die Öffnung reduziert und die Stromschiene 17 teilverdeckt. Die Teilwandungen 19 dienen als Schmutzfänger zum Schutz der Stromschiene und Abtropffläche, wodurch Flüssigkeiten auf der Oberfläche der Führungsschiene nach unten von der Stromschiene 17 weg ablaufen können.

Neben dem Hohlraum 16 für die Stromschiene 17 umfasst das Profilelement 11 zwei geschlossene, sich ebenfalls in Längsrichtung erstreckende Kammern 14, 15. Diese Versorgungskanäle 14, 15 können zum Transport von etwaigen Fluiden oder sonstigen Medien, die für die Wartungsarbeiten benötigt werden, genutzt werden. Für eine installierte Reinigungseinheit 31 kann mittels der Versorgungskanäle 14, 15 bzw. ein Reinigungsmittel, Wasser oder auch Drucklauft transportiert und der Funktionseinheit 31 zur Verfügung gestellt werden.

Die einzelnen, wie in Figur 3 dargestellten Profilelemente 11, sind zumindest was die Form der Außenkontur angeht identisch ausgestaltet. In Längsrichtung können die Profilelemente jedoch Abweichungen zeigen, bspw. können einzelne Profilelemente in ihrer Längsausdehnung variieren. Bevorzugt werden Profilelemente mit geradliniger Längserstreckung angeboten als auch Profilelemente, die in Längsrichtung gekrümmt oder gar gewinkelt ausgestaltet sind. Dadurch lassen sich gerade Laufflächenabschnitte als auch gekrümmte Teilabschnitte der Führungsschiene, respektive der Laufflächen aufbauen. Das Führungssystem lässt sich dadurch sehr flexibel an die Gegebenheiten des Montageortes anpassen.

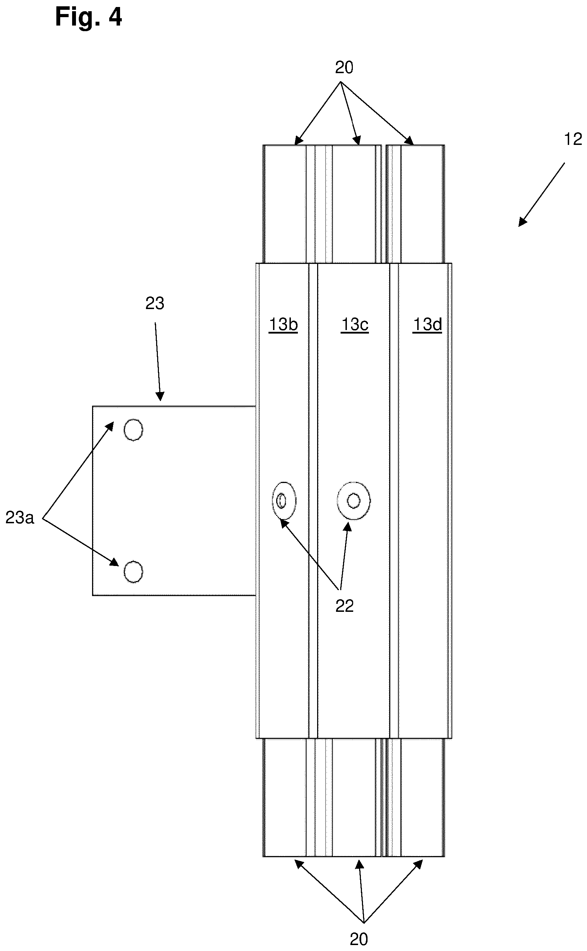

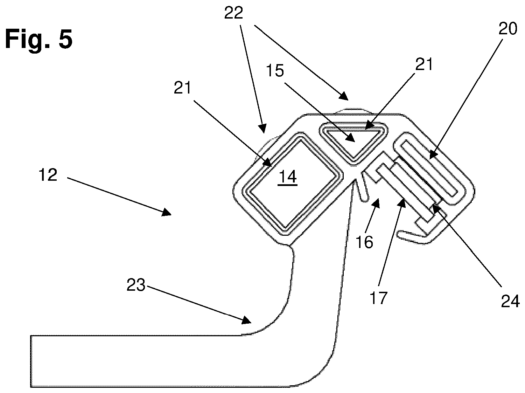

Einzelne Profilelemente können über ihre Stirnseiten zur Verlängerung der Laufflächen und Stromschiene mit weiteren Profilelementen 11 verbunden werden. Dazu kann ein Verbindungselement 12, wie in Figuren 4, 5 dargestellt, eingesetzt werden. Das Verbindungselement 12 weist im Wesentlichen dieselbe Außenkontur (siehe Figur 5) wie ein Profilelement 11 gemäß der Figur 3 auf, sodass sich durch die Einbringung eines solchen Verbindungselementes 12 durchgehende Lauffläche 13a, 13c, 13e ergeben bzw. eine durchgehende Stromschiene 17 ergibt.

An seinen endseitigen Verbindungsstellen weist das Verbindungselement 12 mehrere hohle Zapfen 20 auf, deren Außenkontur der Profilform der Kanalwandungen entspricht, deren Umfang jedoch geringfügig reduziert ist, um die Zapfen in die Hohlräume 14, 15, 16 des Profilelementes 11 passgenau einführen zu können. Dadurch wird eine sichere Verbindung zwischen den Elementen erreicht, die eine ausreichende Kraftübertragung zwischen den Verbindungspartnern 11, 12 sicherstellt. Dichtelemente 21 auf der Außenwand der Zapfen 20 sorgen für eine ausreichende Abdichtung der entstehenden Verbindungskanäle 14, 15, sodass ein Austritt des darin geführten Mediums verhindert wird. Der auf der Stromschiene 17 aufliegende Verbinder 24 dient zur elektrischen Kontaktierung der Stromschiene 17.

Auf wenigstens einer Lauffläche, hier auf der zentralen Lauffläche 13c sowie auf wenigstens einer daneben befindlichen Teilfläche 13b sind Entnahmestellen 22 vorgesehen, über die das in den Versorgungskanälen 14, 15 geführte Medium durch die Fahreinheit 30 bzw. die Funktionseinheit 31 entnommen werden kann. Die Entnahmestellen 22 haben eine Ventilfunktion, um die Entnahmestelle bei Interaktion mit einem Gegenstück, bspw. Stutzen der Fahreinheit 30 bzw. Funktionseinheit 31 zu öffnen und einen Mediumaustausch zu ermöglichen. Idealerweise erfolgt die Interaktion zwischen dem Stutzen und der Entnahmestelle 22 automatisch, wenn die Fahreinheit in den Bereich der Entnahmestellen fährt bzw. diese überdeckt. Wird die Fahreinheit 30 von der Entnahmestelle 22 fortbewegt, so schließt das verbaute Ventil selbstständig und ein unerwünschter Austritt des geführten Mediums wird verhindert.

Die einzelnen Verbindungselemente 12 sind zudem mit einer, von der Unterseite des Verbindungselementes auskragenden Montagekonsole 23 versehen, um die Verbindungselemente 12 und damit die Führungsschiene 10 montieren zu können, bspw. an einem Strukturrahmen der PV-Anlage. Die Montagekonsolen können in Abhängigkeit der Erfordernisse am Montageort unterschiedlich ausgestaltet sein. Über Bohrlöcher 23a am Ende der Konsole 23 lässt sich die Konsole 23 mit der Struktur der PV-Anlage verschrauben.

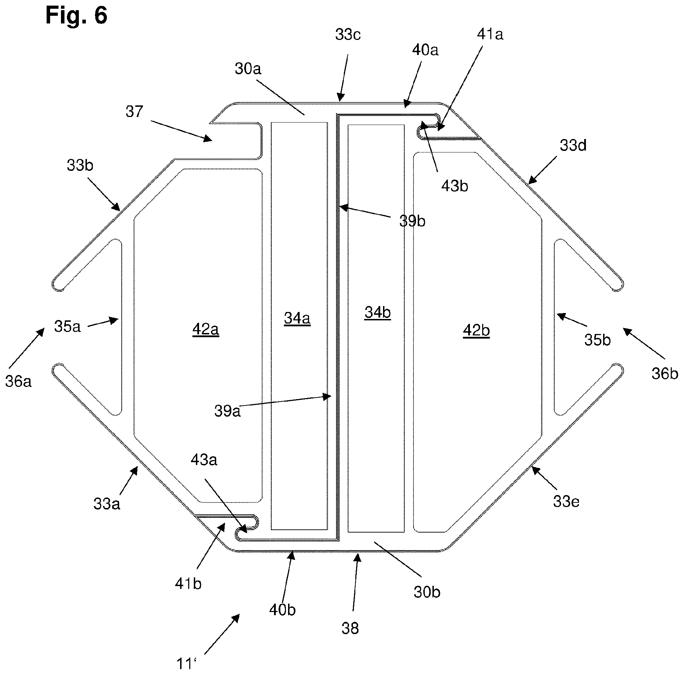

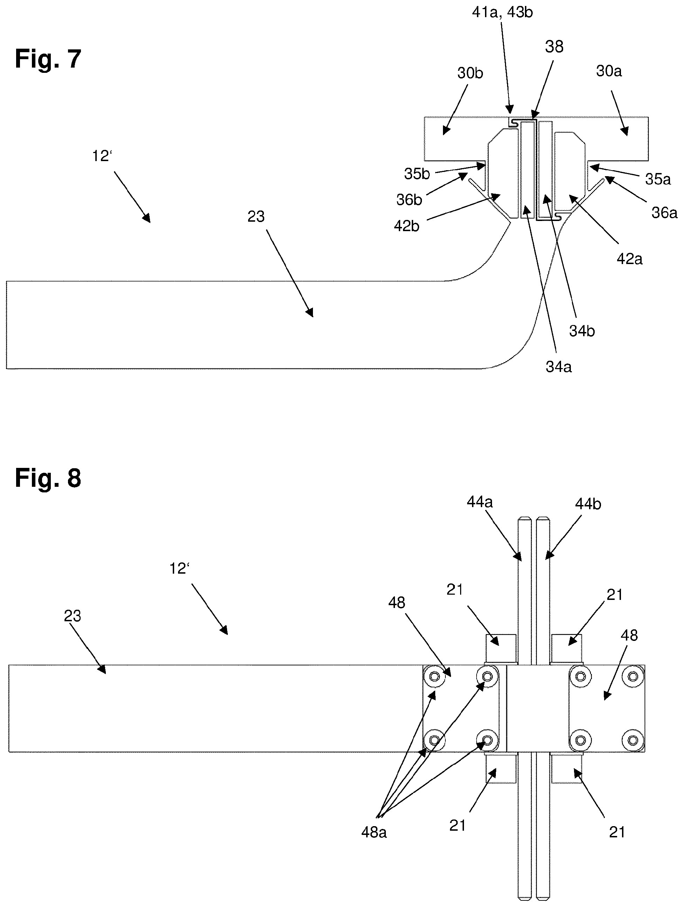

Ein zweites Ausführungsbeispiel der Erfindung ist in Figur 6 dargestellt. Es handelt sich hierbei auch um die in Figur 2 gezeigte Profilform. Die Darstellung der Figur 6 zeigt wie auch Figur 3 einen Profilschnitt durch ein Profilelement 11' für die Führungsschiene 10. Wie auch bei der ersten Ausführungsform gemäß den Figuren 3 - 5 kann die Führungsschiene 10 modulartig aus unterschiedlichen Profilelementen 11' bzw. Verbindungselementen 12' (siehe Figuren 7 bis 9) zusammengesetzt sein. Die Profilelemente 11' unterscheiden sich gegenüber der Variante aus Figur 3 in der konstruktiven Ausführung der Profilform, in funktionalen Hinsicht ist das Profilelement 11' jedoch weitestgehend übereinstimmend zum Profilelement 11 aufgebaut, d.h. es sind ebenfalls Versorgungskanäle sowie ein oder mehrere Stromschienen vorhanden. Auch ist bei der Ausführungsvariante der Figur 6 vorgesehen, dass die zum Profilelement 11' passenden Verbindungselemente eine korrespondieren Profilform aufweisen und ähnlich wie in der Ausführung der Figuren 3 - 5 durch Zapfen miteinander verbindbar sind.

Wie das Profilelement 11 weißt auch das Profilelement 11' der Figur 6 eine gekantete Außenkontur mit den zueinander gewinkelten Teilflächen 33a - 33e auf. Die Teilflächen 33a, 33c und 33e bilden die Laufflächen für die Laufrollen 34 (siehe auch Figur 2). Alternativ könnten natürlich auch bei dieser Ausführung Kegelrollen verwendet werden, die dann sämtliche Teilflächen 33a-33e nutzen.

Im Gegensatz zur Ausführungsvariante der Figuren 3 - 5 ist das Profilelement 11' jedoch nicht einteilig, sondern mehrteilig, insbesondere zweiteilig, gefertigt. Das Profilelement 11' besteht aus zwei Einzelbestandteilen 30a, 30b, die über einen Formschluss zum resultierenden Profilelement 11' zusammengefügt werden können. Beide Einzelbestandteile 30a, 30b weisen eine planare Kontaktfläche 39a, 39b auf, die beim Zusammenfügen der beiden Einzelbestandteile 30a, 30b aneinander liegen. An einem Seitenrand der jeweiligen Kontaktflächen 39a, 39b besitzt jedes Einzelbestandteil 30a, 30b eine auskragende Wand 40a, 40b mit einem hakenförmigen Endabschluss 41, 41b. Der Endabschluss 41a, 41b greift beim Zusammenfügen in ein korrespondierendes Gegenstück 43a, 43b des anderen Einzelbestandteils 30a, 30b. Das jeweilige Gegenstück 43a, 43b ist auf einer der Kontaktfläche 39a, 39b gegenüberliegenden Seite des Einzelbestandteils 30a, 30b ausgeformt. Durch dieses Ineinandergreifen der beiden Verbindungsteile 41, 41b bzw. 43a, 43b lassen sich die beiden Einzelbestandteile 30a, 30b über die gesamte Länge formschlüssig verbinden, sodass die Außenkontur des Profilelementes 11' entsteht.

Beide Einzelbestandteile 30a, 30b sind aus einem elektrisch leitfähigem Material gefertigt, bspw. aus Aluminium. Die außenliegende Oberfläche dieser Einzelbestandteile 30a, 30b ist mit einer elektrisch isolierenden Oberflächenbeschichtung 38 versehen, sodass die beiden Einzelbestandteile 30a, 30b im Kontaktbereich 39a, 39b elektrisch voneinander isoliert sind. Da die Beschichtung 38 nahezu auf die gesamte zugängliche Oberfläche aufgetragen ist, wird auch ein Berührschutz sichergestellt.

Wenigstens eine sich entlang der Führungsschiene bzw. Laufflächen 33a-33e erstreckende Teilfläche 35a, 35b ist unbeschichtet und bildet dadurch eine elektrisch leitfähige Stromschiene, die durch eine auf der Führungsschiene 10 verfahrbare Fahreinheit bzw. Funktionseinheit mittels eines Stromabnehmers kontaktierbar ist. Diese unbeschichteten Flächen 35a, 35b liegen auf gegenüberliegenden Seiten der Profilform im Übergangsbereich zwischen den jeweiligen Teilflächen 33a, 33b bzw. 33d, 33e. Die unbeschichteten Teilflächen 35a, 35b werden durch die Flächenabschnitte 33a, 33b bzw. 33d, 33e teilweise überragt und damit verdeckt, wodurch ein gewisser Schutz der unbeschichteten Oberfläche 35a, 35b vor Verunreinigung sowie ein zusätzlicher Berührschutz bereitgestellt wird. Der durch die überragenden Teilflächen 33a, 33b bzw. 33d, 33e reduzierte Öffnungsbereich 36b, 36a ist so gewählt, dass der Stromabnehmer der Fahr- und Funktionseinheit in den Öffnungsbereich eingeführt und auf der Stromschiene 35a, 35b entlanggleiten kann.

Eine dieser Teilflächen 35a wird führt das Potential der DC-Versorgungsspannung, während die zweite Teilfläche 35b als Nullleiter genutzt wird. Für die Energieversorgung kann eine Gleichspannung von mindestens 24V bereitgestellt werden. Bei langen Wegstrecken der Führungsschiene kann das Gleichspannungspotential zur Reduzierung von Leitungsverlusten erhöht werden, bspw. auf 48V.

Ähnlich wie bei der Ausführungsform der Figuren 3 - 5 weist auch das Profilelement 11' integrierte Versorgungskanäle für den Transport etwaiger Medien wie Reinigungsmittel, usw. auf. Die Versorgungskanäle 42a, 42b erstrecken sich auch hier entlang der Führungsschiene, wobei hier pro Einzelbestandteil 30a, 30b jeweils ein Versorgungskanal 42a, 42b für ein Medium und jeweils ein Kanal 34a, 34b für die Unterbringung der elektrischen Kontakte zur Speisung der Stromschienen vorgesehen sind. Zumindest die Innenwandung der Versorgungskanäle 42a, 42b kann ebenfalls eine isolierende Oberflächenbeschichtung aufweisen.

Die Außenkontur des Profilelementes 11' kann zudem mit einer Vertiefung 37 vorgesehen sein, die zur Aufnahme einer geeigneten Markierung für die automatische Positionsdetektion einer Fahr- bzw. Funktionseinheit geeignet ist. Vorstellbar ist die Integration eines elektrischen Markierungselementes als auch eines strukturellen bzw. visuellen Markierungselementes.

Ein korrespondierendes Verbindungselement 12' für das Profilelement 11' der zweiten Ausführungsform ist in den Figuren 7 - 9 gezeigt. Figur 7 zeigt eine Seitenansicht des Verbindungselementes 12', während Figur 8 eine Ansicht auf die Oberseite des Verbindungselements 12' wiedergibt. Ähnlich wie bei dem Profilelement 11' besteht das Verbindungselement 12' aus zwei Einzelbestandteilen 30a, 30b, die über eine entsprechende Verbindungsgeometrie 41a, 41b, 43a, 43b über die gesamte Länge ihres Führungsweges ineinander schiebbar und dadurch formschlüssig verbindbar sind. Im Gegensatz zum Profilselement 11' umfasst das Verbindungselement 12' im Bereich seiner Oberseite zusätzlichen Bauraum für die Unterbringung der Entnahmestellen 22 für den Zugriff auf die Versorgungskanäle 42a, 42b. An der Unterseite ist die Verbindungskonsole 23 für die Montage an der PV-Anlage ausgebildet.

Wie auch das Profilelement 11' umfasst das Verbindungselement 12' eine Beschichtung der Einzelbestandteile 30a, 30b, um dadurch die elektrisch isolierten Stromschienen 35a, 35b zu realisieren. Auch weisen die Verbindungselemente 12' die Versorgungskanäle 42a, 42b für die Mitführung eines beliebigen Mediums sowie die Kanäle 34a, 34b für die Unterbringung der elektrischen Kontakte zur Speisung der Stromschiene auf.

Wie sich der Draufsicht der Figur 8 entnehmen lässt, ragen an den stirnseitigen Enden der Verbindungselemente 12' aus den Versorgungskanälen für die Stromschienen 34a, 34b Stangen, insbesondere Stahlstangen 44a, 44b heraus, die beim Zusammenfügen eines Verbindungselementes 12' mit dem korrespondierenden Profilelement 11' in die Versorgungskanäle 34a, 34b des Profilelementes 11' hineinragen und dadurch eine mechanische Verbindung sowie eine elektrische Kontaktierung bilden. Durch die Länge der Stangen 44a, 44b wird eine ausreichende Kraftübertragung zwischen den Elementen 11', 12' und somit eine stabile Bauform erzielt. Ersichtlich sind zudem am stirnseitigen Öffnungsbereich der Versorgungskanäle 42a, 42b die Dichtungselemente 21, die ebenfalls beim Zusammenfügen in die offenen Kanäle 42a, 42b des Profilelementes 11' hineinragen und eine ausreichende Abdichtung im Bereich der Schnittstelle gegenüber der Außenumgebung ermöglichen.

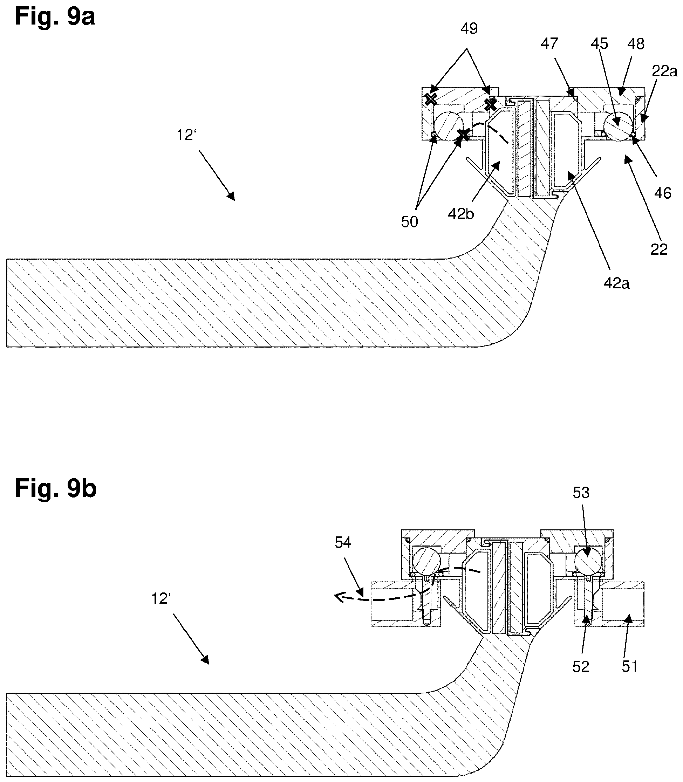

Die Funktion der Entnahmestellen 22 lässt sich einfach anhand der Figur 9a, 9b erläutern. Die jeweils als selbständiges Kugelventil ausgebildeten Entnahmestellen 22 umfassen eine Kugel 45 als Absperrorgan, die zwischen einer Öffnungsstellung (Figur 9b) und einer Schließposition (Figur 9a) bewegbar ist, um eine Entnahme des Mediums aus dem jeweils fluidisch verbunden Versorgungskanal 42a, 42b zu ermöglichen. Bei der hier gezeigten Ausführungsform ist pro Verbindungselement 12' jeweils eine, in Führungsrichtung zentral angeordnete Entnahmestelle 22 pro Kanal 42a, 42b vorgesehen, wobei die Entnahmestellen 22 von einer Unterseite zugänglich sind. Es spricht jedoch nichts dagegen, pro Kanal mehrere Entnahmestellen an einem Verbindungselement 12' vorzusehen, die beispielsweise in Führungsrichtung hintereinander angeordnet sind und eine parallele Entnahme des Mediums aus dem jeweiligen Kanal gestatten.

Die Kugel 45 ist in der Zeichnungsebene der Figuren 9a, 9b in Vertikalrichtung beweglich ausgestaltet, wobei der untere Grundträger 22a dieser Entnahmestelle 22 eine Öffnung aufweist, die durch die Kugel 45 in der Sperrposition verschlossen ist. Im Öffnungsbereich des Grundträgers ist ein unterer O-Ring 46 vorgesehen. Durch den vorherrschenden Mediumdruck innerhalb der Versorgungskanäle 42a, 42b wird die Kugel 45 vertikal nach unten auf den O-Ring 46 gedrückt, sodass die Öffnung der Entnahmestelle 22 abgedichtet und verschlossen wird.

Die Oberseite wird durch einen abnehmbarer Deckel 48 gebildet, der über einen weiteren oberen O-Ring 47 mit dem Grundträger 22a einen abgedichteten Ventilkörper bildet. Der Deckel 48 kann über Schrauben 48a (siehe Figur 8) mit dem Grundträger 22a verschraubt sein. Figur 9b zeigt den Fall, dass eine Fahreinheit oder eine mit der Fahreinheit verbundener Wagen die Entnahmestelle 22 überdeckt. Die Fahreinheit ist bspw. mit einer Wasserkollektoreinheit 51 ausgestattet, um Medium aus den Versorgungskanälen 42a, 42b zu entnehmen. Die Kollektoreinheit 51 umfasst dazu bspw. einen Stift 52, der die Kugel 45 in die offene Position (Figur 9b) nach oben drückt und so den Wasserfluss 54 aus den Versorgungskanälen 42a, 42b freigibt. In dem Moment, in dem die Kollektoreinheit 51 wegfährt, bringt der Wasserdruck die Kugel 45 wieder in die geschlossene Position (Figur 9a) zurück.

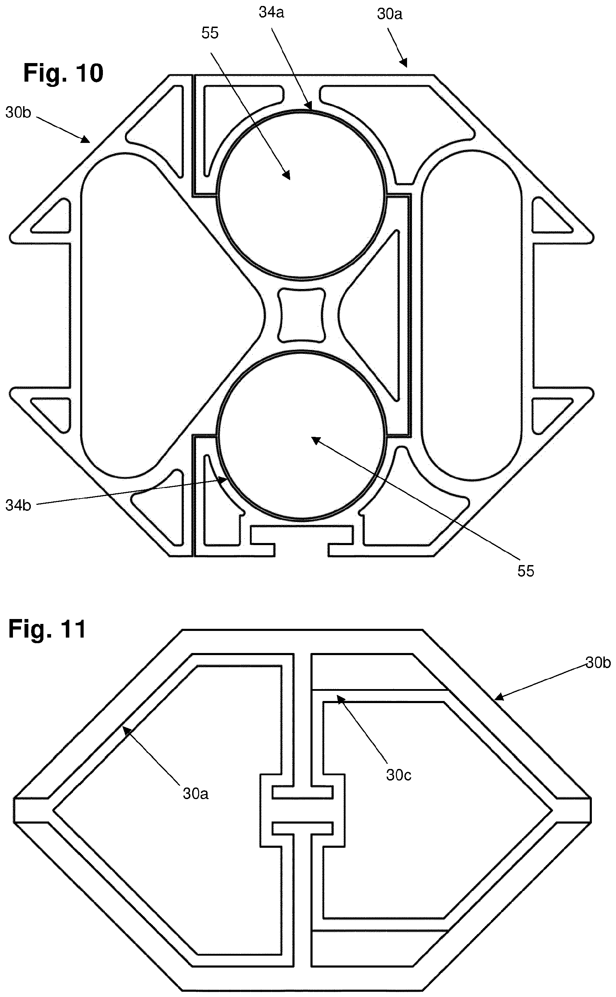

Weitere Ausführungsformen des Profilelementes für erfindungsgemäße Führungsschienen sind in den Figuren 10 und 11 schematisch dargestellt. Bei der Ausführungsvariante der Figur 10, die in funktionaler Hinsicht ähnlich zur zweiten Ausführungsvariante realisiert ist, wird ein Formschluss zwischen den beiden Einzelbestandteilen 30a, 30b zusätzlich durch die stirnseitig aus den Verbindungselementen auskragende Rundprofile 55 verwirklicht. Diese Rundprofile 55 ragen hier in die entsprechenden kreisrunden Versorgungskanäle 34a, 34b und verhindern somit, dass die Einzelbestandteile 30a, 30b auseinander rutschen.

Bei der Ausführungsform der Figur 11 wird zusätzlich zu den beiden Einzelbestandteilen 30a, 30b ein drittes tragendes Kunststoffprofil 30c verwendet, das gleichzeitig auch die Aufgabe des Isolators übernimmt, wodurch auf eine gesonderte Beschichtung verzichtet werden kann.

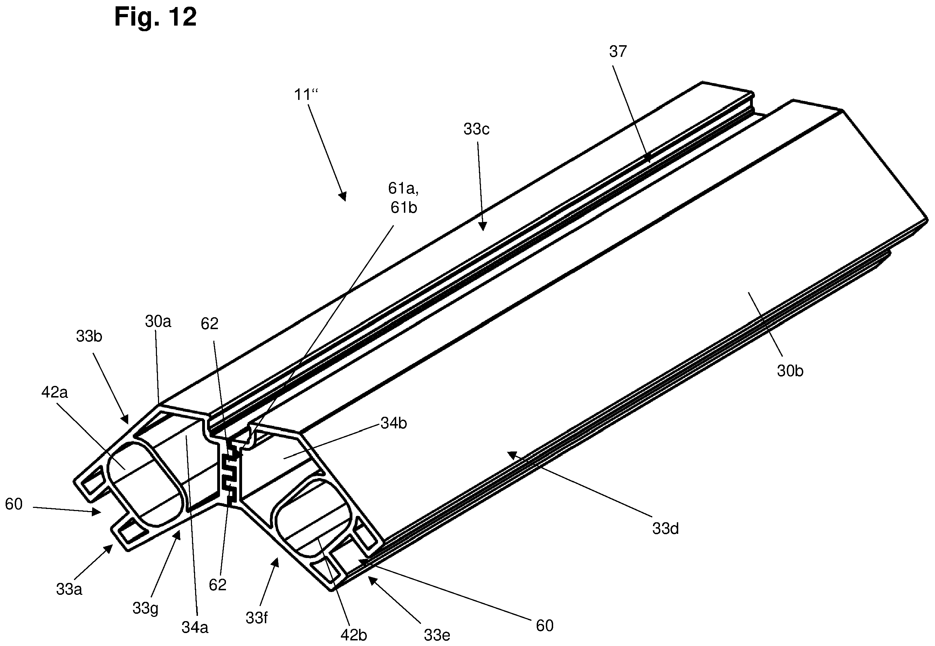

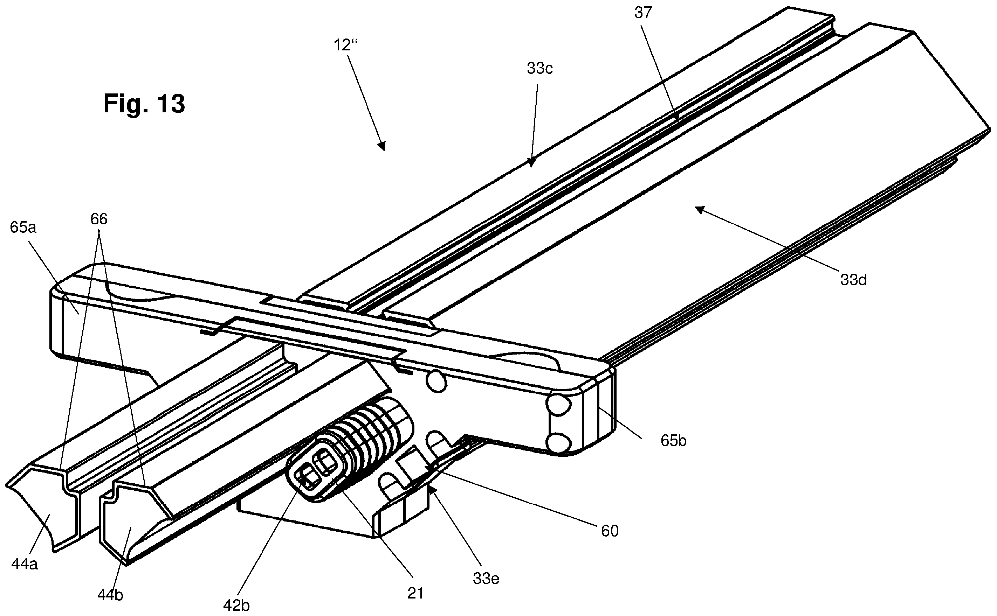

Ein fünftes Ausführungsbeispiel der Erfindung ist in den Figur 12 und 13 dargestellt. Die Darstellung der Figur 12 zeigt eine perspektivische Ansicht eines Profilelement 11" für die erfindungsgemäße Führungsschiene 10, Wie bei den übrigen Ausführungsformen wird die Führungsschiene 10 modulartig aus unterschiedlichen Profilelementen 11" (siehe Figur 12) bzw. Verbindungselementen 12" (siehe Figur 13) zusammengesetzt. Die Profilelemente 11" unterscheiden sich gegenüber den anderen Ausführungsvariante in der konstruktiven Ausführung der Profilform, in funktionaler Hinsicht ist das Profilelement 11" jedoch weitestgehend übereinstimmend aufgebaut, d.h. es sind ebenfalls Versorgungskanäle sowie ein oder mehrere Stromschienen vorhanden. Zwei Profilelemente 11" werden mittels passenden Verbindungselementen 12", die eine korrespondierende Profilform aufweisen, verbunden.

Auch das Profilelement 11" der Figur 12 weist eine gekantete Außenkontur mit den zueinander gewinkelten Teilflächen 33a-33g auf, hier insbesondere in C-Form. Die Teilflächen 33a, 33c,33e dienen als Laufflächen für Laufrollen bzw. Antriebsmittel eines Führungsschlittens der Fahreinheit. Das Antriebsmittel, bspw. eine angetriebene Laufrolle oder ein angetriebenes Laufband des Führungsschlittens, läuft entlang der Lauffläche 33c. Zwei um jeweils einen Winkel, insbesondere 90° oder mehr, dazu versetzte Anordnungen von Laufrollen des Führungsschlittens rollen an den Laufflächen 33a, 33e entlang. Letztere können aufgrund des Versatzes der Laufflächen eine gewisse Klemmkraft ausüben, insbesondere werden die auf den Laufflächen 33a, 33e abrollenden Laufrollen nach schräg oben in Richtung der Lauffläche 33c gedrückt, so dass die Fahreinheit positionsstabil entlang der Führungsschiene geführt werden kann und insbesondere ein Verkippen verhindert wird.

Die Laufflächen 33a, 33e sind zudem mit einer sich in Längsrichtung parallel zur Lauffläche 33a, 33e erstreckenden Nut 60 versehen. Idealerweise sind die auf den Laufflächen 33a, 33e abrollenden Laufrollen des Führungsschlittens mit einer umlaufenden Rippe versehen, die in die jeweilige Nut 60 eingreift. Die Rippe dient als zusätzliche Sicherung gegen ein Kippen des Führungsschlittens.

Wie die Ausführungen der Figuren 6 bis 11 ist auch das Profilelement 11" mehrteilig ausgestaltet und besteht aus den beiden Einzelbestandteilen 30a, 30b, die über einen Formschluss zum resultierenden Profilelement 11" zusammengefügt werden können. Beide Einzelbestandteile 30a, 30b weisen eine Kontaktfläche 61a, 61b auf, die beim Zusammenfügen der beiden Einzelbestandteile 30a, 30b aneinander liegen. Jedes der Einzelbestandteile 30a, 30b weist an seiner Kontaktfläche 61a, 61b wenigstens eine in Längsrichtung des Profilelementes 11" verlaufende Rippe 62 auf, die in die passende Nut der gegenüberliegenden Kontaktseite 61a, 61b eingreift. Die so realisierte Mehrfachrippenverbindung zwischen den Einzelbestandteilen 30a, 30b wird vorzugsweise zusätzlich mit einem 2K Kleber verklebt. Anstelle oder zusätzlich zur Mehrfachrippenverbindung könnte auch eine Schwalbenschwanzverbindung zwischen den Einzelbestandteilen 30a, 30b realisiert werden.

Beide Einzelbestandteile 30a, 30b sind aus einem elektrisch leitfähigen Material wie Aluminium gefertigt, bspw. per Aluminium-Strangpress. Die außenliegende Oberfläche dieser Einzelbestandteile 30a, 30b ist mit einer elektrisch isolierenden Oberflächenbeschichtung versehen, sodass die beiden Einzelbestandteile 30a, 30b auch im Kontaktbereich 61a, 61b elektrisch voneinander isoliert sind. Da die Beschichtung nahezu auf die gesamte zugängliche Oberfläche aufgetragen ist, wird auch ein Berührschutz sichergestellt. Die Beschichtung kann eine Farbe mit elektrisch isolierender Wirkung und zusätzlichem Schutz gegen Witterungseinflüsse sein.

Die vorgenannte Beschichtung ist jedoch im Bereich der Nuten 60, insbesondere im Bereich des Nutbodens, ausgespart, so dass dieser Flächenbereich eine in Längsrichtung verlaufende Stromschiene bildet. Das jeweilige elektrische Potential kann von einem Stromabnehmer, der innerhalb der Nut 60 geführt wird, abgegriffen werden. Bspw. führt eine so gebildete Stromschiene das Potential der DC-Versorgungsspannung, bspw. 24V oder 48V, während die zweite Nut 60 und die dortige Stromschiene den Nullleiter bereitstellt.

Ähnlich wie bei den vorherigen Ausführungsformen weist auch das Profilelement 11" integrierte Versorgungskanäle 42a, 42b für den Transport etwaiger Medien, wie Reinigungsmittel, Wasser, Abwasser, Luft auf. Die Versorgungskanäle 42a, 42b erstrecken sich auch hier entlang der Führungsschiene 10, wobei hier pro Einzelbestandteil 30a, 30b jeweils ein Versorgungskanal 42a, 42b für ein Medium und jeweils ein Kanal 34a, 34b für die Unterbringung der elektrischen Verbindungskontakte zur Überbrückung der Schnittstellen zwischen benachbarten Elementen 11", 12" vorgesehen sind. Zumindest die Innenwandung der Versorgungskanäle 42a, 42b kann ebenfalls eine isolierende Oberflächenbeschichtung aufweisen.

Die Außenkontur des Profilelementes 11" kann zudem im Bereich der oberen Lauffläche 33c mit einer Vertiefung 37 vorgesehen sein, die zur Aufnahme einer geeigneten Markierung für die automatische Positionsdetektion einer Fahr- bzw. Funktionseinheit geeignet ist. Vorstellbar ist die Integration eines elektrischen Markierungselementes als auch eines strukturellen bzw. visuellen Markierungselementes.

Ein korrespondierendes Verbindungselement 12" für das Profilelement 11" der fünften Ausführungsform ist in Figur 13 gezeigt. Figur 13 zeigt ebenfalls eine perspektivische Seitenansicht des Verbindungselementes 12". Ähnlich wie bei dem Profilelement 11" besteht das Verbindungselement 12" aus zwei Einzelbestandteilen 30a, 30b, die analog zum Profilelement 11" über eine Mehrfachrippenverbindung über die gesamte Länge ihres Führungsweges ineinander schiebbar und dadurch verbindbar sind. Im Gegensatz zum Profilselement 11" umfasst das Verbindungselement 12" im Bereich seiner Oberseite zusätzlichen Bauraum für die Unterbringung der Entnahmestellen 22 für den Zugriff auf die Versorgungskanäle 42a, 42b. Das Verbindungselement 12" und/oder die Profilelemente können die Verbindungskonsole für die Montage an der PV-Anlage aufweisen.

Wie auch das Profilelement 11" umfasst das Verbindungselement 12" eine Beschichtung der Einzelbestandteile 30a, 30b, die im Bereich der Nuten 60 zur Realisierung der elektrisch leitenden Stromschienen ausgespart ist. Auch weisen die Verbindungselemente 12' die Versorgungskanäle 42a, 42b für die Mitführung eines beliebigen Mediums sowie die Kanäle 34a, 34b für die Unterbringung der elektrischen Verbinder zwischen benachbarten Profilelementen 11" bzw. Verbindungselementen 12". Insbesondere ragen hier, ähnlich der Ausführung gemäß Fig. 8, an den stirnseitigen Enden der Verbindungselemente 12" aus den Kanälen 34a, 34b Aluminiumstangen 44a, 44b heraus, die beim Zusammenfügen eines Verbindungselementes 12" mit dem korrespondierenden Profilelement 11" in die Versorgungskanäle 34a, 34b des Profilelementes 11" hineinragen und dadurch eine mechanische Verbindung sowie eine elektrische Kontaktierung bilden. Die Aluminiumstangen 44a, 44b sind durch Kunststoffhülsen 66 zumindest teilweise ummantelt, wodurch eine gewisse Isolierung und auch Vorspannung der Stangen 44a, 44b beim Einbringen in die Kanäle 34a, 34b des Profilelementes 11" erzielt wird.

Ersichtlich sind weiterhin die Dichtungselemente 21 am stirnseitigen Öffnungsbereich der Versorgungskanäle 42a, 42b, die ebenfalls beim Zusammenfügen in die offenen Kanäle 42a, 42b des Profilelementes 11" hineinragen und eine ausreichende Abdichtung im Bereich der Schnittstelle gegenüber der Außenumgebung ermöglichen. Die Dichtungselemente 21 sind umfangsseitig mit Dichtlippen versehen, die sowohl eine gute radiale Abdichtung als auch eine einfache Montage gewährleisten und auch eine temperaturbedingte Ausdehnung ermöglichen.

Wie bei der Ausführung gemäß Figuren 7-9 umfasst das Verbindungselement 12" einen polygonartigen Körper, der Wasserkammern 65a, 65b für die Ausbildung von Entnahmestellen 22 bildet. Die seitlich von der Profilform abstehenden Wasserkammern 65a, 65b umfassen ein Hohlvolumen, das mit einem zugeordneten Versorgungskanal 42a, 42b fluidisch verbunden ist. An der Unterseite der Wasserkammern 55a, 65b sind ein oder mehrere Entnahmestellen 22 vorgesehen. Die Entnahmestellen 22 sind ebenfalls mit dem Kugelventilmechanismus, der bereits anhand der Figuren 9a, 9b erläutert wurde, ausgestattet. Auch hier umfassen die Ventile 22 eine Kugel 45 als Absperrorgan, die durch eine Feder nach unten gegen eine Öffnung in der Unterseite der Wasserkammern 65a, 65b gedrückt wird. Wird die Kugel 45 nach oben gedrückt, so kann über die Entnahmestellen 22 ein im jeweiligen Versorgungskanal 42a, 42b enthaltenes Medium entnommen werden.

Anders als in der Ausführung gemäß den Figuren 7-9 sind die Wasserkammer 65a, 65b in Figur 12 durch zwei Einzelteile gebildet, deren Verbindungsnaht quer zur Längsrichtung der Führungsschiene verläuft. Die Einzelteile sind miteinander verschraubt und/oder verklebt. Das Verbindungselement kann zudem mit einer Montagekonsole zur Aufhängung der Führungsschiene an einer PV-Anlage versehen sein.

## Patentansprüche

1. Führungssystem zur Installation an einer Photovoltaik-Anlage und zur Führung wenigstens einer mobilen Fahreinheit (30) für die Ausführung von Wartungsarbeiten an der PV-Anlage, wobei das Führungssystem eine Führungsschiene (10) mit wenigstens zwei Laufflächen (13a, 13b, 13c, 33a, 33c, 33e) für Führungsmittel, insbesondere Laufrollen (34), der Fahreinheit (30) aufweist **dadurch gekennzeichnet, dass** wenigstens eine entlang der Laufflächen (13a, 13b, 13c, 33a, 33c, 33e) verlaufende Stromschiene (17, 35a, 35b, 60) für die Energieversorgung der mobilen Fahreinheit (30) vorgesehen ist.

2. Führungssystem nach Anspruch 1, **dadurch gekennzeichnet, dass** die Führungsschiene (10) aus einer Vielzahl modularen Profilelementen (11, 11', 11") besteht, die zur Verlängerung der Laufflächen (13a-13e, 33a-33e) und/oder Stromschiene (17, 35a, 35b, 6ß) miteinander verbindbar sind.

3. Führungssystem nach Anspruch 1 oder 2, **dadurch gekennzeichnet, dass** die die Laufflächen (13a, 13b, 13c, 33a, 33c, 33e) der Führungsschiene (10) neben linearen Teilabschnitten auch in Längsrichtung gekrümmte Teilabschnitte aufweisen, wobei die Führungsschiene (10) insbesondere aus Profilelementen (11, 11', 11") mit linearen Laufflächen (13a, 13b, 13c, 33a, 33c, 33e) und aus Profilelementen (11, 11', 11") mit in Längsrichtung gekrümmtem Verlauf der Laufflächen (113a, 13b, 13c, 33a, 33c, 33e) zusammengesetzt ist.

4. Führungssystem nach einem der Ansprüche 2 oder 3, **dadurch gekennzeichnet, dass** wenigstens zwei Profilelemente (11, 11', 11") über ein Verbindungselement (12, 12', 12") miteinander verbunden sind, wobei das Verbindungselement (12, 12', 12") mit zum Profilelement (11, 11', 11") korrespondierenden Laufflächen (13a-13e, 33a-33e) und/oder einer korrespondierenden Stromschiene (17, 35a, 35b, 60) versehen ist, so dass sich bei der Verbindung von zwei Profilelementen (11, 11', 11") durchgehende Laufflächen (13a, 13b, 13c, 33a, 33c, 33e) ergeben bzw. eine Kontaktierung der Stromschienen (17, 35a, 35b, 60) der Profilelemente (11, 11', 11") sichergestellt ist.

5. Führungssystem nach Anspruch 4, **dadurch gekennzeichnet, dass** an den Verbindungsseiten des Verbindungselements (12, 12', 12") und/oder des Profilelements (11, 11', 11") seitlich auskragende Kopplungsmittel (44a, 44b), insbesondere in Form von auskragenden Zapfen (20) vorgesehen sind, die bei der Verbindung mit einem Profilelement (11, 11', 11") bzw. Verbindungselement (12, 12', 12") in einen Hohlraum (14, 15, 16, 42a, 42b, 34a, 34b) des Verbindungspartners eintreten und zur Kraftübertragung dienen.

6. Führungssystem nach Anspruch 4 oder 5, **dadurch gekennzeichnet, dass** das Verbindungselement (12, 12', 12") ein Montageelement zur Montage der Führungsschiene an der PV-Anlage aufweist, insbesondere in Form einer auskragenden Montagekonsole (23), die bevorzugt von einer Unterseite des Verbindungselementes (12, 12', 12") auskragt.

7. Führungssystem nach einem der vorstehenden Ansprüche, **dadurch gekennzeichnet, dass** die Führungsschiene (10) wenigstens einen, vorzugsweise wenigstens zwei zu den Laufflächen (13a, 13b, 13c, 33a, 33c, 33e) parallel verlaufende Versorgungskanäle (14, 15, 42a, 42b) aufweist, insbesondere zur Bereitstellung einer Fluidversorgung der Funktionseinheit, wobei bevorzugt die Führungsschiene (10) ein oder mehrere Entnahmestellen (22) aufweist, insbesondere ventilartig ausgestaltete Entnahmestellen (22) aufweist, die eine temporäre Fluidverbindung zwischen einer Fahreinheit (30) und wenigstens einem der Versorgungskanäle (14, 15, 42a, 42b) zulässt.

8. Führungssystem (10) nach Anspruch 7, **dadurch gekennzeichnet, dass** die Entnahmestellen (22) auf wenigstens einer der Laufflächen oder Teilflächen (13b, 13c) der Profilelemente (11, 11', 11") und/oder der Verbindungselemente (12, 12', 12") vorgesehen sind und/oder eine Fluidverbindung ermöglicht ist, wenn die Fahreinheit (30) oder ein mit der Fahreinheit (30) verbundener Wagen die Entnahmestelle (22) überdeckt.

9. Führungssystem nach einem der Ansprüche 7 oder 8, **dadurch gekennzeichnet, dass** die Verbindungselemente (12, 12', 12") und/oder Profilelemente (11, 11', 11") im Bereich Ihrer Verbindungsseiten, insbesondere innerhalb der Versorgungskanäle (14, 15, 16, 42a, 42b) Dichtungselemente (21) aufweisen, um die Schnittstelle zwischen Profilelement (11, 11', 11") und Verbindungselement (12, 12', 12"), insbesondere die Kontaktstelle im Bereich der Versorgungskanäle (14, 15, 16, 42a, 42b) abzudichten.

10. Führungssystem nach einem der vorstehenden Ansprüche, **dadurch gekennzeichnet, dass** die Profilelemente (11', 11") und/oder die Verbindungselemente (12', 12") mehrteilig, insbesondere zweiteilig ausgestaltet sind, wobei die Einzelbestandteile (30a, 30b) eines einzelnen Profil- oder Verbindungselementes (11', 11", 12', 12") per Form-, Kraft- oder Stoffschluss zusammengefügt sind und/oder die wenigstens eine Stromschiene durch eine Teilfläche (35a, 35b, 60) der Oberfläche des Profil- oder Verbindungselements (11', 11") gebildet ist, insbesondere sind mehrere Stromschienen durch unterschiedliche Einzelbestandteile (30a, 30b) des mehrteiligen Profil- oder Verbindungselementes (11', 11") ausgebildet.

11. Führungssystem nach Anspruch 10, **dadurch gekennzeichnet, dass** die Einzelbestandteile (30a, 30b) aus einem elektrisch leitfähigen Material gefertigt sind und zumindest abschnittsweise eine elektrisch isolierende Oberflächenbeschichtung (38) aufweisen oder durch ein isolierendes Trägerelement (30) verbunden sind, wobei vorzugsweise die ein oder mehreren Stromschienen durch unbeschichtete Oberflächenbereiche (35a, 35b, 60) der Einzelbestandteile (30a, 30b) gebildet sind, und wobei die unbeschichteten Oberflächenbereiche (35a, 35b, 60) bevorzugt durch Teilflächen (33a, 33b, 33d, 33e) der Einzelbestandteile (30a, 30b), insbesondere vorstehende Wandungen teilverdeckt sind.

12. Führungssystem nach einem der vorstehenden Ansprüche, **dadurch gekennzeichnet, dass** die Stromschiene (17) in einem gesonderten Kanal (16) der Führungsschiene (10) verläuft, wobei der Kanal (16) innerhalb der Profilform des Profilelementes (11) und/oder des Verbindungselementes (12) ausgeprägt ist und von unten oder seitlich über eine durchgehende Längsöffnung durch einen Stromabnehmer einer Fahreinheit (30) zugänglich ist, wobei vorzugsweise die Längsöffnung durch wenigstens eine, insbesondere wenigstens zwei, sich nach aussen erstreckende Teilwandungen (19) der Führungsschiene (10) teilverdeckt ist.

13. Führungssystem nach einem der vorstehenden Ansprüche, **dadurch gekennzeichnet, dass** an der Führungsschiene (10), insbesondere an den Profil- oder Verbindungselementen (11', 11", 12', 12") wenigstens eine, durch eine auf der Führungsschiene (10) verfahrbare Funktionseinheit detektierbare Markierung angeordnet ist, wobei die Markierung insbesondere in einer Profilvertiefung (37) der Führungsschiene (10) anordenbar ist.

14. Führungssystem nach einem der vorstehenden Ansprüche, **dadurch gekennzeichnet, dass** die Führungsschiene (10) insgesamt drei parallel verlaufende Laufflächen (13a, 13b, 13c, 33a, 33c, 33e) aufweist, die als Lauffläche (13a, 13b, 13c, 33a, 33c, 33e) für drei, um 90° bzw. 135° versetzte Führungsrollen (34) dienen.

15. System zur Durchführung von Wartungsarbeiten an einer Photovoltaik-Anlage mit einem an einer PV-Anlage befestigbaren Führungssystem gemäß den Merkmalen eines der vorstehenden Ansprüche und einer entlang der Führungsschiene (10) des Führungssystems fahrbaren Fahreinheit (30), wobei vorzugsweise durch die Fahreinheit (30) eine wechselbare Funktionseinheit (31) zur Durchführung einer Wartungsarbeit an der PV-Anlage aufnehmbar ist.

## Claims

1. A guiding system for installation on a photovoltaic system and for guiding at least one mobile travelling unit (30) for carrying out maintenance work on the PV system, wherein the guiding system has a guide rail (10) with at least two running surfaces (13a, 13b, 13c, 33a, 33c, 33e) for guide means, in particular rollers (34), of the travelling unit (30), **characterised in that** at least one conductor rail (17, 35a, 35b, 60) extending along the running surfaces (13a, 13b, 13c, 33a, 33c, 33e) is provided for the power supply of the mobile travelling unit (30).

2. The guiding system according to claim 1, **characterised in that** the guide rail (10) consists of a plurality of modular profile elements (11, 11', 11") which can be connected to one another to extend the running surfaces (13a-13e, 33a-33e) and/or conductor rail (17, 35a, 35b, 6ß).

3. The guiding system according to claim 1 or 2, **characterised in that** the running surfaces (13a, 13b, 13c, 33a, 33c, 33e) of the guide rail (10) have, in addition to linear partial regions, also partial regions curved in the longitudinal direction, wherein the guide rail (10) is composed in particular of profile elements (11, 11', 11") with linear running surfaces (13a, 13b, 13c, 33a, 33c, 33e) and of profile elements (11, 11', 11") with running surfaces (113a, 13b, 13c, 33a, 33c, 33e) curved in the longitudinal direction.

4. The guiding system according to one of claims 2 or 3, **characterised in that** at least two profile elements (11, 11', 11") are connected to one another via a connecting element (12, 12', 12"), wherein the connecting element (12, 12', 12") is provided with running surfaces (13a-13e, 33a-33e) corresponding to the profile element (11, 11', 11") and/or a corresponding conductor rail (17, 35a, 35b, 60), so that continuous running surfaces (13a, 13b, 13c, 33a, 33c, 33e) are produced when two profile elements (11, 11', 11") are connected to one another, and contacting of the conductor rails (17, 35a, 35b, 60) of the profile elements (11, 11', 11") is ensured.

5. The guiding system according to claim 4, **characterised in that** laterally projecting coupling means (44a, 44b), in particular in the form of projecting pins (20), are provided on the connecting sides of the connecting element (12, 12', 12") and/or the profile element (11, 11', 11"), which coupling means enter a cavity (14, 15, 16, 42a, 42b, 34a, 34b) of the connecting partner when connected to a profile element (11, 11', 11") or connecting element (12, 12', 12") and serve to transmit force. (12, 12', 12").

6. The guiding system according to claim 4 or 5, **characterised in that** the connecting element (12, 12', 12") has a mounting element for mounting the guide rail on the PV system, in particular in the form of a projecting mounting bracket (23), which preferably projects from an underside of the connecting element (12, 12', 12").

7. The guiding system according to one of the preceding claims, **characterised in that** the guide rail (10) has at least one, preferably at least two supply channels (14, 15, 42a, 42b) extending parallel to the running surfaces (13a, 13b, 13c, 33a, 33c, 33e), in particular for providing a fluid supply to the functional unit, wherein preferably the guide rail (10) has one or more tapping points (22), in particular tapping points (22) of valve-like design, which permit a temporary fluid connection between a travelling unit (30) and at least one of the supply channels (14, 15, 42a, 42b).

8. The guiding system (10) according to claim 7, **characterised in that** the tapping points (22) are provided on at least one of the running surfaces or partial areas (13b, 13c) of the profile elements (11, 11', 11") and/or the connecting elements (12, 12', 12") and/or a fluid connection is made possible when the travelling unit (30) or a carriage connected to the travelling unit (30) covers the tapping point (22).

9. The guiding system according to one of claims 7 or 8, **characterised in that** the connecting elements (12, 12', 12") and/or profile elements (11, 11', 11") have sealing elements (21) in the region of their connecting sides, in particular within the supply channels (14, 15, 16, 42a, 42b) in order to seal the interface between the profile element (11, 11', 11") and the connecting element (12, 12', 12"), in particular the contact point in the region of the supply channels (14, 15, 16, 42a, 42b).

10. The guiding system according to one of the preceding claims, **characterised in that** the profile elements (11', 11") and/or the connecting elements (12', 12") are designed in several parts, in particular in two parts, wherein the individual components (30a, 30b) of an individual profile or connecting element (11', 11", 12', 12") are joined together by form, frictionally engaged or integrally bonded connection and/or the at least one conductor rail is formed by a partial area (35a, 35b, 60) of the surface of the profiled or connecting element (11', 11"), in particular several conductor rails are formed by different individual components (30a, 30b) of the multi-part profiled or connecting element (11', 11").

11. The guiding system according to claim 10, **characterised in that** the individual components (30a, 30b) are made of an electrically conductive material and have an electrically insulating surface coating (38) at least in portions or are connected by an insulating carrier element (30), wherein preferably the one or more conductor rails are formed by uncoated surface regions (35a, 35b, 60) of the individual components (30a, 30b), and wherein the uncoated surface regions (35a, 35b, 60) are preferably partially covered by partial areas (33a, 33b, 33d, 33e) of the individual components (30a, 30b), in particular projecting walls.

12. The guiding system according to any one of the preceding claims, **characterised in that** the conductor rail (17) runs in a separate channel (16) of the guide rail (10), wherein the channel (16) is formed within the profile shape of the profile element (11) and/or the connecting element (12) and is accessible from below or laterally via a continuous longitudinal opening through a current collector of a travelling unit (30), wherein preferably the longitudinal opening is partially covered by at least one, in particular at least two, outwardly extending partial walls (19) of the guide rail (10).

13. The guiding system according to any one of the preceding claims, **characterised in that** at least one marking detectable by a functional unit movable on the guide rail (10) is arranged on the guide rail (10), in particular on the profile or connecting elements (11', 11", 12', 12"), wherein the marking can be arranged in particular in a profile depression (37) of the guide rail (10).

14. The guiding system according to any one of the preceding claims, **characterised in that** the guide rail (10) has a total of three running surfaces (13a, 13b, 13c, 33a, 33c, 33e) extending in parallel, which serve as running surfaces (13a, 13b, 13c, 33a, 33c, 33e) for three guide rollers (34) offset by 90° or 135°.

15. A system for carrying out maintenance work on a photovoltaic system with a guiding system which can be fastened to a PV system according to the features of any one of the preceding claims and a travelling unit (30) which can be moved along the guide rail (10) of the guiding system, wherein preferably the drive unit (30) can accommodate an exchangeable functional unit (31) for carrying out maintenance work on the PV system.

## Revendications

1. Système de guidage destiné à être installé sur une installation photovoltaïque et destiné à guider au moins une unité de déplacement (30) mobile pour l'exécution d'opérations de maintenance sur l'installation PV, dans lequel le système de guidage présente un rail de guidage (10) avec au moins deux surfaces de roulement (13a, 13b, 13c, 33a, 33c, 33e) pour des moyens de guidage, en particulier des galets de roulement (34), de l'unité de déplacement (30), **caractérisé en ce qu'**au moins une barre omnibus (17, 35a, 35b, 60) s'étendant le long des surfaces de roulement (13a, 13b, 13c, 33a, 33c, 33e) est prévue pour l'alimentation en énergie de l'unité de déplacement (30) mobile.

2. Système de guidage selon la revendication 1, **caractérisé en ce que** le rail de guidage (10) est constitué d'une pluralité d'éléments profilés (11, 11', 11") modulaires, qui peuvent être reliés les uns aux autres pour allonger les surfaces de roulement (13a-13e, 33a-33e) et/ou la barre omnibus (17, 35a, 35b, 6ß).

3. Système de guidage selon la revendication 1 ou 2, **caractérisé en ce que** les surfaces de roulement (13a, 13b, 13c, 33a, 33c, 33e) du rail de guidage (10) présentent des sections partielles également incurvées dans la direction longitudinale à côté de sections partielles linéaires, dans lequel le rail de guidage (10) se compose en particulier d'éléments profilés (11, 11', 11") avec des surfaces de roulement (13a, 13b, 13c, 33a, 33c, 33e) linéaires et d'éléments profilés (11, 11', 11") avec un profil incurvé dans la direction longitudinale des surfaces de roulement (113a, 13b, 13c, 33a, 33c, 33e).

4. Système de guidage selon l'une quelconque des revendications 2 ou 3, **caractérisé en ce qu'**au moins deux éléments profilés (11, 11', 11") sont reliés l'un à l'autre par l'intermédiaire d'un élément de liaison (12, 12', 12"), dans lequel l'élément de liaison (12, 12', 12") est pourvu de surfaces de roulement (13a-13e, 33a-33e) correspondant à l'élément profilé (11, 11', 11") et/ou d'une barre omnibus (17, 35a, 35b, 60) correspondante de telle sorte que, lors de la liaison de deux éléments profilés (11, 11', 11"), il résulte des surfaces de roulement (13a, 13b, 13c, 33a, 33c, 33e) continues ou une mise en contact des barres omnibus (17, 35a, 35b, 60) des éléments profilés (11, 11', 11") est assurée.

5. Système de guidage selon la revendication 4, **caractérisé en ce que** des moyens de couplage (44a, 44b) en porte-à-faux latéralement, en particulier sous la forme de tourillons (20) en porte-à-faux, sont prévus sur les côtés de liaison de l'élément de liaison (12, 12', 12") et/ou de l'élément profilé (11, 11', 11"), qui entrent dans un espace creux (14, 15, 16, 42a, 42b, 34a, 34b) du partenaire de liaison lors de la liaison à un élément profilé (11, 11', 11") ou à un élément de liaison (12, 12', 12") et servent à la transmission de force.

6. Système de guidage selon la revendication 4 ou 5, **caractérisé en ce que** l'élément de liaison (12, 12', 12") présente un élément de montage destiné au montage du rail de guidage sur l'installation PV, en particulier sous la forme d'une console de montage (23) en porte-à-faux, qui est en porte-à-faux de manière préférée depuis un côté inférieur de l'élément de liaison (12, 12', 12").

7. Système de guidage selon l'une quelconque des revendications précédentes, **caractérisé en ce que** le rail de guidage (10) présente au moins une, de préférence au moins deux canaux d'alimentation (14, 15, 42a, 42b) s'étendant de manière parallèle aux surfaces de roulement (13a, 13b, 13c, 33a, 33c, 33e), en particulier pour la fourniture d'une alimentation en fluide de l'unité fonctionnelle, dans lequel de manière préférée le rail de guidage (10) présente un ou plusieurs emplacements de retrait (22), en particulier présente des emplacements de retrait (22) configurés à la manière de soupape, qui autorise/autorisent une communication fluidique temporaire entre une unité de déplacement (30) et au moins un des canaux d'alimentation (14, 15, 42a, 42b).

8. Système de guidage (10) selon la revendication 7, **caractérisé en ce que** les emplacements de retrait (22) sont prévus sur au moins une des surfaces de roulement ou des surfaces partielles (13b, 13c) des éléments profilés (11, 11', 11") et/ou des éléments de liaison (12, 12', 12"), et/ou une communication fluidique est rendue possible lorsque l'unité de déplacement (30) ou un chariot relié à l'unité de déplacement (30) recouvre l'emplacement de retrait (22).

9. Système de guidage selon l'une quelconque des revendications 7 ou 8, **caractérisé en ce que** les éléments de liaison (12, 12', 12") et/ou les éléments profilés (11, 11', 11") présentent dans la zone de leurs côtés de liaison, en particulier à l'intérieur des canaux de liaison (14, 15, 16, 42a, 42b), des éléments d'étanchéité (21) pour étanchéifier l'interface entre l'élément profilé (11, 11', 11") et l'élément de liaison (12, 12', 12"), en particulier l'emplacement de contact dans la zone des canaux d'alimentation (14, 15, 16, 42a, 42b).

10. Système de guidage selon l'une quelconque des revendications précédentes, **caractérisé en ce que** les éléments profilés (11', 11") et/ou les éléments de liaison (12', 12") sont configurés en plusieurs parties, en particulier en deux parties, dans lequel les éléments constitutifs individuels (30a, 30b) d'un élément de profilé ou de liaison (11', 11", 12', 12") individuel sont regroupés par complémentarité de forme, à force ou par liaison de matière et/ou l'au moins une barre omnibus est formée par une surface partielle (35a, 35b, 60) de la surface de l'élément profilé ou de liaison (11', 11"), en particulier plusieurs barres omnibus sont réalisées par différents éléments constitutifs individuels (30a, 30b) de l'élément profilé ou de liaison (11', 11") en plusieurs parties.

11. Système de guidage selon la revendication 10, **caractérisé en ce que** les éléments constitutifs individuels (30a, 30b) sont produits à partir d'un matériau électriquement conducteur et présentent au moins par endroits un revêtement de surface (38) électriquement isolant ou sont reliés par un élément de support (30) isolant, dans lequel de préférence les une ou plusieurs barres omnibus sont formées par des zones de surface (35a, 35b, 60) non revêtues des éléments constitutifs individuels (30a, 30b), et dans lequel les zones de surface non revêtues (35a, 35b, 60) sont en partie dissimulées de manière préférée par des surfaces partielles (33a, 33b, 33d, 33e) des éléments constitutifs individuels (30a, 30b), en particulier des parois faisant saillie.

12. Système de guidage selon l'une quelconque des revendications précédentes, **caractérisé en ce que** la barre omnibus (17) s'étend dans un canal (16) séparé du rail de guidage (10), dans lequel le canal (16) est estampé à l'intérieur de la forme profilée de l'élément profilé (11) et/ou de l'élément de liaison (12) et est accessible depuis le bas ou latéralement par une ouverture longitudinale continue à travers un collecteur de courant d'une unité de déplacement (30), dans lequel de préférence l'ouverture longitudinale est en partie dissimulée par au moins une, en particulier deux parois partielles (19) s'étendant vers l'extérieur du rail de guidage (10).

13. Système de guidage selon l'une quelconque des revendications précédentes, **caractérisé en ce qu'**au moins un marquage détectable par une unité fonctionnelle pouvant être déplacée sur le rail de guidage (10) est disposé sur le rail de guidage (10), en particulier sur les éléments profilés ou de liaison (11', 11", 12', 12"), dans lequel le marquage peut être disposé en particulier dans un renfoncement profilé (37) du rail de guidage (10).

14. Système de guidage selon l'une quelconque des revendications précédentes, **caractérisé en ce que** le rail de guidage (10) présente au total trois surfaces de roulement (13a, 13b, 13c, 33a, 33c, 33e) s'étendant de manière parallèle, qui font office de surface de roulement (13a, 13b, 13c, 33a, 33c, 33e) pour trois galets de guidage (34) décalés de 90° ou de 135°.

15. Système de mise en œuvre d'opérations de maintenance sur une installation photovoltaïque avec un système de guidage pouvant être fixé sur une installation PV selon les caractéristiques d'une des revendications précédentes et une unité de déplacement (30) pouvant être déplacée le long du rail de guidage (10) du système de guidage, dans lequel de préférence une unité fonctionnelle (31) remplaçable destinée à mettre en œuvre une opération de maintenance sur l'installation PV peut être reçue par l'unité de déplacement (30).
